Europäisches Patentamt

European Patent Office

Office européen des brevets

(19)

(11) Veröffentlichungsnummer: **0 310 873**

**A1**

(12) **EUROPÄISCHE PATENTANMELDUNG**

(21) Anmeldenummer: **88115555.0**

(22) Anmeldetag: **22.09.88**

(51) Int. Cl.⁴: **F16H 47/02 , B60K 20/02**

(30) Priorität: **07.10.87 DE 3733883**

(43) Veröffentlichungstag der Anmeldung:
**12.04.89 Patentblatt 89/15**

(84) Benannte Vertragsstaaten:
**AT DE FR IT**

(71) Anmelder: **Xaver Fendt & Co.**
**Johann-Georg-Fendt-Strasse 4**
**D-8952 Marktoberdorf(DE)**

(72) Erfinder: **Stroppel, Alfred, Prof. Dr. Ing.**
**Bossler Strasse 74/I**
**D-7311 Dettingen/Teck(DE)**
Erfinder: **Dziuba, Peter**
**Hochstätterberg 33 1/15**
**D-8951 Lengenwang(DE)**
Erfinder: **Relsch, Johann**
**Saliterstrasse 90**
**D-8952 Marktoberdorf(DE)**

(54) **Antrieb für ein Nutzfahrzeug.**

(57) Die bisherigen Antriebe für Nutzfahrzeuge besitzen eine Schaltvorrichtung mit mehreren Schalthebeln, was die angebotenen Fahrgeschwindigkeitsstufen unübersichtlich macht.

Um die Anzahl der Schalthebel bei gleichbleibendem Angebot an Fahrgeschwindigkeitsstufen zu verringern, sind bei einem Nutzfahrzeugantrieb mit zwei alternativ nutzbaren Getrieben (Schaltgetriebe (3), Hydrostatgetriebe (21, 22, 23)) deren Schaltkulissen (25, 26) über einen Neutralsteg (27) miteinander verbunden und beiden Getrieben ein einziger Schalthebel (24) zugeordnet, bei dessen Übergang von der einen Schaltkulisse (25, 26) zur anderen (26, 25) die Schaltmittel des der verlassenen Schaltkulisse zugeordneten Getriebes desaktiviert und die Schaltmittel des der angesteuerten Schaltkulisse zugeordneten Getriebes aktiviert werden.

Der Antrieb eignet sich für Fahrzeuge mit einem großen Angebot an Fahrgeschwindigkeitsstufen.

Fig. 2

EP 0 310 873 A1

## Antrieb für Nutzfahrzeuge

Die Erfindung betrifft einen Antrieb für Nutzfahrzeuge, insbesondere für Ackerschlepper, mit einem stufenlos verstellbaren, für Fahrten in beiden Richtungen ausgelegten Hydrostatgetriebe, einem alternativ dazu benutzbaren Stufenschaltgetriebe und einer Schaltvorrichtung mit einer der Führung eines Schalthebels dienenden Schaltkulisse für jedes der Getriebe.

Der benutzbare Fahrgeschwindigkeitsbereich von Ackerschleppern erstreckt sich derzeit von ca. 2 km/h bis zu 40 km/h. Damit die verschiedensten in der Landwirtschaft anfallenden Arbeiten mit der jeweils günstigsten Fahrgeschwindigkeit durchgeführt werden können, ist das Getriebe dieser Fahrzeuge vor allem in der unteren Hälfte des Fahrgeschwindigkeitsbereiches verhältnismäßig fein abgestuft. So sind derzeit Schleppergetriebe mit 12 Fahrgeschwindigkeitsstufen die Regel und Getriebe mit bis zu 16 Fahrgeschwindigkeitsstufen und mehr stellen keine Ungewöhnlichkeit dar.

Getriebe mit einer derart großen Anzahl Fahrgeschwindigkeitsstufen sind üblicherweise aus mehreren aufeinander abgestimmten Getrieben zusammengesetzt. Für landwirtschaftliche Zwecke hat es sich als zweckmäßig erwiesen, neben dem eigentlichen Schaltgetriebe ein Gruppengetriebe vorzusehen, mit dem ein bestimmter Teil des gesamten zur Verfügung stehenden Fahrgeschwindigkeitsbereiches beim Durchschalten des Schaltgetriebes bestrichen werden kann. Jedes dieser Getriebe ist mit einer Schaltvorrichtung versehen, die einen innerhalb einer Schaltkulisse geführten Schalthebel aufweist, mit dem der Fahrer des Fahrzeuges die gewünschte Fahrgeschwindigkeitsstufe wählen kann. Je nach Anzahl der mit einem dieser Getriebe schaltbaren Fahrgeschwindigkeitsstufen ist die zugeordnete Schaltkulisse beispielsweise als H, HH, h bzw. im Falle von stufenlos verstellbaren Antrieben, die in diesem Zusammenhang zur Realisierung sehr geringer Fahrgeschwindigkeiten (Kriechganggeschwindigkeiten) ebenfalls schon für den Antrieb von Nutzfahrzeugen vorgeschlagen wurden, in I-Form ausgestaltet.

Daneben enthält ein herkömmlicher Schlepperantrieb (eigene Ausführung) außer den oben erwähnten Getrieben ein mit einer Rückwärtsstufe versehenes sogenanntes Feinstufengetriebe, das es dem Fahrer des Fahrzeuges neben der Umkehrung einer größeren Anzahl Fahrstufen ermöglicht, durch Betätigen eines zusätzlichen Schalthebels eine Fahrgeschwindigkeitsstufe anzuwählen, die gegenüber einer bestimmten mittleren Fahrgeschwindigkeitsstufe entweder eine etwas höhere Fahrgeschwindigkeit erlaubt oder eine größere Zugkraft zur Verfügung stellt. Ferner weisen Schlepperantriebe in der Regel ein Kriechganggetriebe auf, das extrem langsame Fahrgeschwindigkeiten erlaubt.

Um bei all diesen Getrieben eine bestimmte gewünschte Fahrgeschwindigkeit einzustellen, hat der Fahrer des Fahrzeuges eine Vielzahl von Schalthebeln zu betätigen. Die große Anzahl der Schalthebel macht aber die angebotenen Fahrgeschwindigkeitsstufen recht unübersichtlich und verleitet ungeübte Fahrer zu Fehlbedienungen, die schlimme Folgen zeitigen können.

Ausgehend von dem aufgezeigten Stand der Technik besteht die Aufgabe der Erfindung darin, einen Antrieb der beschriebenen Art für Nutzfahrzeuge mit einer dazugehörenden Schaltvorrichtung zu versehen, bei der die Anzahl der Betätigungshebel verringert sind, ohne daß dadurch das Angebot an Fahrgeschwindigkeitsstufen herabgesetzt wird.

Die Lösung dieser Aufgabe wird darin gesehen, daß bei einem Antrieb der eingangs beschriebenen Gattung
die Schaltkulissen der Getriebe (Schaltgetriebe, Hydrostatgetriebe) über einen Neutralsteg miteinander verbunden sind, allen Getrieben (Schaltgetriebe, Hydrostatgetriebe) ein einziger Schalthebel zugeordnet ist und
beim Übergang des Schalthebels von einer Schaltkulisse zur benachbarten Schaltkulisse die Schaltmittel des der verlassenen Schaltkulisse zugeordneten Getriebes desaktiviert und die Schaltmittel des der angesteuerten Schaltkulisse zugeordneten Getriebes aktiviert werden.

Durch die Erfindung ist ein Antrieb geschaffen worden, bei dem die alternativ nutzbaren Getriebe durch einen einzigen Schalthebel geschaltet werden können. Da für Rückwärtsfahrten das Hydrostatgetriebe zur Verfügung steht, kann die mechanische Rück wärtsstufe im Stufenschaltgetriebe entfallen, was neben der geringeren Anzahl von Schalthebeln eine weitere Bedienungsvereinfachung des Antriebes bedeutet, da der einzige für die beiden Getriebe vorgesehene Schalthebel gleichzeitig zur Aktivierung des gewünschten Getriebes und zur Betätigung desselben verwendet werden kann. Dabei ist der Fahrer des Fahrzeuges jederzeit darüber im Bilde, welches dieser Getriebe augenblicklich in Aktion ist, da ihm dieses an der jeweils belegten Schaltkulisse kundgetan wird.

Die Maßnahmen gemäß Anspruch 2 erlauben einen besonders einfachen Aufbau der Schaltvorrichtung, da zum Auslösen bzw. Sperren der Hilfskräfte und damit zum Aktivieren bzw. Desaktivieren der Getriebe keine komplizierten Steuerungen und mechanischen Gestänge erforderlich sind.

Die Erfindung wird im folgenden anhand einer Zeichnung näher erläutert. Es zeigt:

Fig. 1 den erfindungsgemäßen Antrieb eines Ackerschleppers in einer schematischen Ansicht und

Fig. 2 die Schaltkulisse für die beiden wahlweise benutzbaren Getriebe des Antriebes nach Fig. 1.

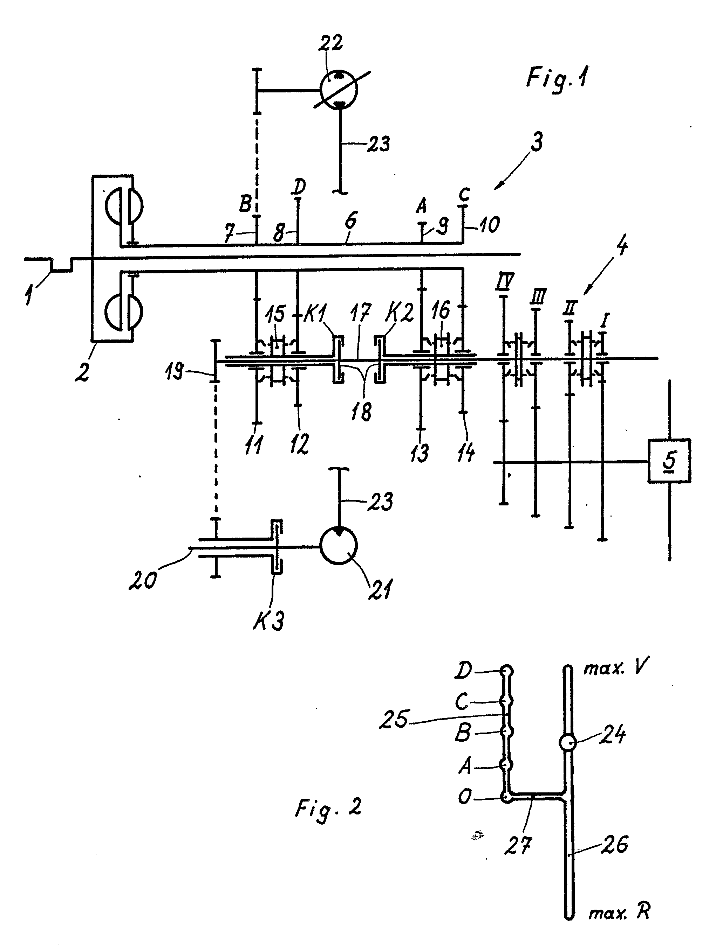

Der Antrieb für einen Ackerschlepper besteht gemäß Fig. 1 in Leistungsflußrichtung gesehen aus einem Antriebsmotor 1, einer Turbokupplung 2, einem schaltbaren Getriebe 3, einem schaltbaren Gruppengetriebe 4 mit vier Stufen I - IV und dem in der Hinterachse des Fahrzeuges untergebrachten Differentialgetriebe 5, von dem aus die nicht gezeigten Antriebsräder angetrieben werden.

Das Lastschaltgetriebe 3 weist vier drehfest auf einer Eingangswelle 6 angeordnete Zahnräder 7, 8, 9, 10 auf, die jeweils mit Zahnrädern 11, 12, 13, 14 kämmen, von denen die Zahnräder 11, 12 auf einer einen Antriebsteil einer elektrisch betätigten Kupplung K1 darstellenden Kupplungstrommel K1a und die Zahnräder 13, 14 auf einer den Antriebsteil einer Kupplung K2 bildenden Kupplungstrommel K2a drehbar gelagert sind. Die miteinander kämmenden Zahnräder 7 bis 14 bilden dabei die jeweiligen Fahrgeschwindigkeitsstufen A, B, C und D. Auf jeder Kupplungstrommel K1a, K2a befinden sich hilfskraftbetätigte synchronisierte Schaltkupplungen 15, 16, die zur Schaffung einer der angegebenen Fahrgeschwindigkeiten A - D mit dem die betreffende Stufe bildenden Zahnrad 11 - 14 verbindbar sind. Der Abtriebsteil der Kupplungen K1, K2 besteht aus einer gemeinsamen Abtriebswelle 17, die über Kupplungslamellen 18 je nach gewünschter Fahrgeschwindigkeitsstufe mit einer der Kupplungstrommeln K1a, K2a verbindbar sind. Durch wechselweises Betätigen der Kupplungen K1, K2 und vorheriges Schalten der gewünschten Zahnradstufen A - D kann somit ohne Zugkraftunterbrechung die Fahrgeschwindigkeitsstufe A- D gewechselt werden.

Auf der Abtriebswelle 17 der Kupplungen K1, K2 ist ferner ein Zahnrad 19 angeordnet, das von der Abtriebswelle 20 eines hydrostatischen Konstantmotors 21 antreibbar ist. In die Antriebsverbindung zwischen dem Konstantmotor 21 und dem Zahnrad 19 ist eine Schaltkupplung K3 angeordnet, mit der der hydraulische Leistungsfluß unterbrochen oder hergestellt werden kann. Angetrieben wird der Konstantmotor 21 von einer permanent von dem Zahnrad 7 des Lastschaltgetriebes 3 angetriebenen Verstellpumpe 22, mit der er über Druckmittelleitungen 23 in Verbindung steht.

Bei ausgeschalteter Kupplung K3 stellt der verbleibende mechanische Antrieb 16 Fahrgeschwindigkeitsstufen zur Verfügung, die jeweils in Gruppen zu vier Fahrgeschwindigkeitsstufen I - IV lastschaltbar sind. Hierzu ist neben der gewünschten Stufe I -e Schaltkupplung 15, 16 des Lastschaltgetriebes 3 mit einer der Zahnräder 11 - 14 auf der Kupplungstrommel K1a, K2a zu kuppeln und die zugeordnete Kupplung K1, K2 zu schließen, während die andere Kupplung K3 geöffnet ist.

Wenn für sehr geringe Fahrgeschwindigkeiten das Lastschaltgetriebe 3 ausgeschaltet und dafür das aus der Verstellpumpe 22 und dem Konstantmotor 21 bestehende stufenlos verstellbare Hydrostatgetriebe eingesetzt werden soll, so sind die Kupplungen K1, K2 aus- und die Kupplung K3 einzurücken. In diesem Fall erfolgt der Leistungsfluß vom Antriebsmotor 1 über die Turbokupplung, das Eingangszahnrad des Lastschaltgetriebes 3, die Verstellpumpe 22, den Konstantmotor 21, die Ausgangswelle 17 des des lastschaltbaren Getriebes 3 und das Gruppengetriebe 4. Dadurch stehen auch bei stufenlosem Antrieb des Fahrzeuges vier Fahrgeschwindigkeitsbereiche zur Verfügung, die eine stufenlose Verstellung der Fahrgeschwindigkeit in beiden Fahrtrichtungen zwischen 0 und einer maximalen Fahrgeschwindigkeit ermöglichen. Die maximale Fahrgeschwindigkeit ist dabei durch Wahl der Stufe I - IV des Gruppengetriebes 4 bestimmt.

Zur Steuerung des lastschaltbaren Getriebes 3 bzw. des Hydrostatgetriebes 21, 22, 23 dient ein Schalthebel 24, der, wie in Fig. 2 gezeigt, entlang einer Kulisse verschiebbar ist. Die Kulisse besteht aus zwei nebeneinander angeordneten I-förmigen Schaltkulissen 25, 26, die durch einen Neutralsteg 27 in h-Form miteinander verbunden sind. Denkbar sind aber auch z. B. eine H- oder Y-förmige Ausgestaltung. Die eine Kulisse 25 weist Raststellen 0, A, B, C und D für die verschiedenen Schaltstufen des lastschaltbaren Getriebes 3 auf, wobei die Raststelle 0, die der Fahrgeschwindigkeit Null entspricht, am linken Ende des Neutralsteges 27 liegt, und die Schaltstufe D dem größtmöglichen Fahrgeschwindigkeitsbereich zugeordnet ist. Beim Bewegen des Schalthebels 24 von einer dieser Raststellen 0 - D zur nächsten werden, wie bereits oben angegeben, die Kupplungen K1, K2 und die Synchronisierkupplungen entsprechend den Erfordernissen umgeschaltet.

Soll das Hydrostatgetriebe benutzt werden, so ist der Schalthebel 25 über den Neutralsteg 27 in die andere Kulisse 26 zu bringen. Beim Passieren des Neutralsteges 27 werden mit dem Schalthebel 25 nicht gezeigte Schalter betätigt, die die Stromversorgung der Kupplungen K1, K2 unterbinden und eine Stromversorgung zur Kupplung K3 herstellen. All dies geschieht für den Fahrer unbewußt und er kann unmittelbar darauf durch Verschieben des Schalthebels 24 entweder in die eine oder andere Richtung innerhalb der Schaltkulisse 26 das Fahrzeug mit stufenlos veränderbarer Geschwindigkeit vorwärts- oder rückwärts fahren.

**Ansprüche**

1. Antrieb für Nutzfahrzeuge, insbesondere für Ackerschlepper, mit einem stufenlos verstellbaren, für Fahrten in beiden Richtungen ausgelegten Hydrostatgetriebe, einem alternativ dazu benutzbaren Stufenschaltgetriebe und einer Schaltvorrichtung mit einer der Führung eines Schalthebels dienenden Schaltkulisse für jedes der Getriebe,
**dadurch gekennzeichnet,**
daß die Schaltkulissen (25, 26) der Getriebe (Schaltgetriebe (3), Hydrostatgetriebe (21, 22, 23)) über einen Neutralsteg (27) miteinander verbunden sind,
daß allen Getrieben (Schaltgetriebe (3), Hydrostatgetriebe (21, 22, 23)) ein einziger Schalthebel (24) zugeordnet ist und
daß beim Übergang des Schalthebels (24) von einer Schaltkulisse (25, 26) zur benachbarten Schaltkulisse (26, 25) die Schaltmittel des der verlassenen Schaltkulisse zugeordneten Getriebes desaktiviert und die Schaltmittel des der angesteuerten Schaltkulisse zugeordneten Getriebes aktiviert werden.

2. Antrieb nach Anspruch 1,
**dadurch gekennzeichnet,**
daß die Getriebe (Schaltgetriebe (3), Hydrostatgetriebe (21, 22, 23)) mittels Hilfskraft schaltbar sind.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 230 661 (DEERE & CO.) <br> * Zusammenfassung; Figur 3 * <br> --- | 1,2 | F 16 H 47/02 <br> B 60 K 20/02 |
| A | FR-A-2 437 315 (DEERE & CO.) <br> * Seite 2, Zeilen 2-35; Figuren * <br> --- | 1 | |
| A | DE-A-1 425 837 (HANOMAG) <br> * Seite 5, Absatz 2 - Seite 6, Absatz 1; Figuren * <br> --- | 1,2 | |
| A | GB-A- 971 797 (DOWTY) <br> * Seite 2, Zeile 72 - Seite 3, Zeile 25; Figuren * <br> --- | 1 | |
| A | DE-A-1 227 751 (DOWTY) <br> * Spalte 6; Ansprüche 1,3,4 * <br> ----- | 1,2 | |

**RECHERCHIERTE SACHGEBIETE (Int. Cl.4)**

F 16 H
B 60 K
G 05 G

Der vorliegende Recherchenbericht wurde für alle Patentansprüche erstellt

| Recherchenort | Abschlußdatum der Recherche | Prüfer |
|---|---|---|
| DEN HAAG | 13-01-1989 | MENDE H. |